# EUROPEAN PATENT APPLICATION

(11) **EP 2 796 790 A1**
(43) Date of publication of application: **29.10.2014**
(21) Application number: 12859396.9
(22) Date of filing: 29.11.2012
(51) Int. Cl.: F23R 3/42

(54) **GAS TURBINE ENGINE PROVIDED WITH SCROLL**

(30) Priority: 21.12.2011 JP 2011279349
(71) Applicant: Kawasaki Jukogyo Kabushiki Kaisha, Kobe-shi, Hyogo 650-8670 (JP)
(72) Inventor: UEMURA, Daisuke, Akashi-shi Hyogo 673-8666 (JP); YAMASAKI, Yoshihiro, Akashi-shi Hyogo 673-8666 (JP); NAKASUJI, Takahiro, Akashi-shi Hyogo 673-8666 (JP)
(74) Representative: Jenkins, Peter David
(86) International application number: PCT/JP2012/080971
(87) International publication number: WO 2013/094380

(57) **Abstract**

A gas turbine engine having high reliability is provided by suppressing occurrence of thermal stress between a scroll and a support member thereof. A gas turbine engine equipped with a combustor of a single-can type includes a scroll to guide a combustion gas fed from a combustor to a turbine while swirling the combustion gas about a rotation axis, a flange member to support the scroll with respect to the gas turbine engine from an inner peripheral side of the scroll, and a coupling member of an annular shape to couple the scroll and the flange member with each other. The scroll and the flange member are connected to the coupling member such that the scroll and the flange member are not in direct contact with each other.

## Description

### CROSS REFERENCE TO THE RELATED APPLICATION

This application is based on and claims Convention priority to Japanese patent application No. 2011-279349, filed December 21, 2011, the entire disclosure of which is herein incorporated by reference as a part of this application.

### BACKGROUND OF THE INVENTION

### (Field of the Invention)

The present invention relates to a gas turbine engine provided with a scroll, and particularly, to a structure for supporting the scroll.

### (Description of Related Art)

A scroll is used as one of component parts of a gas turbine engine of a single-can combustor type. A high-temperature combustion gas generated in a combustor is guided to a turbine through the scroll while being swirled about a rotation axis of the scroll. The scroll used in this way allows the combustion gas discharged from one combustor to flow uniformly with respect to a first-stage turbine nozzle (refer to Patent Document 1, for example).

### [Prior Art Document]

[Patent Document 1] JP Laid-open Patent Publication No. 2006-132425

### SUMMARY OF THE INVENTION

However, since the scroll, which is generally formed of a sheet metal, is exposed to the high-temperature combustion gas that flows inside the scroll, the scroll tends to be deformed due to thermal expansion. Therefore, if the scroll is directly coupled to a member for supporting the scroll, which is not in direct contact with the combustion gas, thermal stress is caused by a difference in temperature, which might result in cracks.

In order to solve the above-mentioned problem, an object of the present invention is to provide a highly reliable gas turbine engine by suppressing occurrence of thermal stress between the scroll and the support member thereof.

In order to achieve the above object, a gas turbine engine according to the present invention is a gas turbine engine equipped with a combustor of a single-can type, which includes: a scroll to guide a combustion gas fed from a combustor to a turbine while swirling the combustion gas about a rotation axis; a flange member to support the scroll with respect to the gas turbine engine from an inner peripheral side of the scroll; and a coupling member of an annular shape to couple the scroll and the flange member with each other, in which the scroll and the flange member are connected to the coupling member such that the scroll and the flange member are not in direct contact with each other.

According to the above configuration, since the scroll and the flange member are joined via the coupling member so as not to be in direct contact with each other, occurrence of thermal stress due to a difference in temperature between the high-temperature scroll and the flange member is suppressed, thereby effectively preventing cracks from being formed in those members.

In one embodiment of the present invention, the coupling member may include: an outer peripheral annular portion forming an outer peripheral surface of the coupling member, and configured to be connected to the scroll, an inner peripheral annular portion forming an inner peripheral surface of the coupling member, and configured to be connected to the flange member, and an intermediate annular portion that intervenes between the outer peripheral portion and the inner peripheral portion, and extends in a radial direction. According to this configuration, it is possible to easily prevent cracks from being formed in the scroll by appropriately selecting the radial dimension and the axial dimension of the intermediate annular portion extending in the radial direction.

In one embodiment of the present invention, the coupling member may be made of the same material as a material forming the scroll. That is, although a portion of the coupling member which is connected to the scroll is also exposed to the high temperature like the scroll, if the coupling member is formed of the same material as the scroll which has excellent heat resistance and oxidation resistance, it is possible to stably support the scroll over a long period of time.

In one embodiment of the present invention, the flange member may include a tubular inner peripheral portion and a tubular outer peripheral portion, the inner peripheral portion having one end in an axial direction connected to one end in an axial direction of the outer peripheral portion, and the coupling member may be connected to the outer peripheral portion of the flange member and to the scroll. According to this configuration, since the flange member is formed to be extendable in the radial direction, the scroll is more stably supported by the flange member such that thermal expansion of the scroll in the radial direction is absorbed by the flange member.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a longitudinal cross-sectional view showing the configuration of a gas turbine engine according to an embodiment of the present invention;
Fig. 2 is a longitudinal cross-sectional view showing a main part of the gas turbine engine shown in Fig. 1; and
Fig. 3 is a transverse cross-sectional view schematically showing a main part of the gas turbine engine shown in Fig. 1.

### DESCRIPTION OF EMBODIMENTS

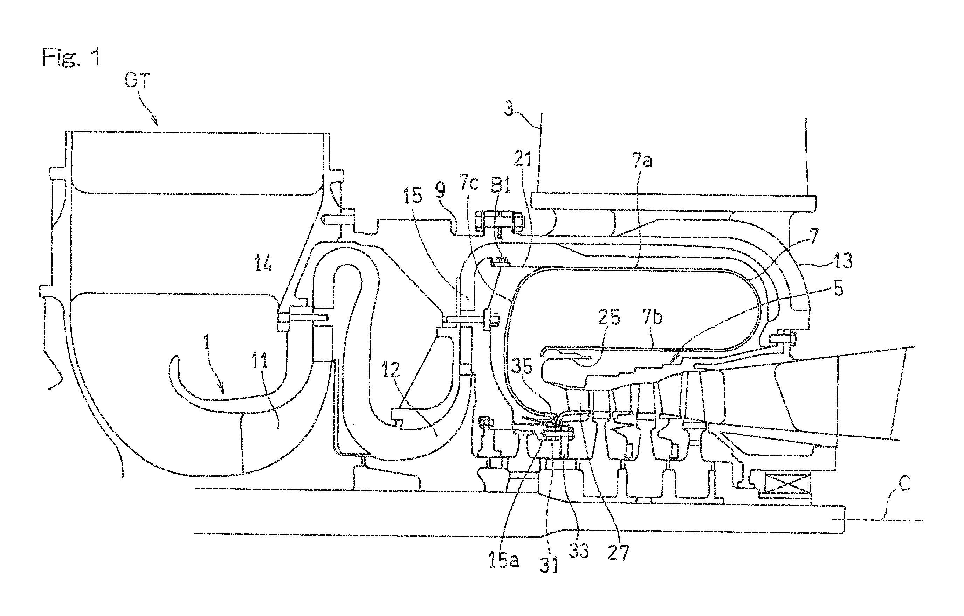

Hereinafter, an embodiment of the present invention will be described with reference to the drawings. Fig. 1 is a longitudinal cross-sectional view showing a gas turbine engine GT according to an embodiment of the present invention. The gas turbine engine GT includes, as component parts thereof, a compressor 1, a combustor 3 of a single-can type, and a turbine 5. A load such as a power generator (not shown) is driven by an output of the gas turbine engine GT. A scroll 7 is provided between the combustor 3 and the turbine 5. The scroll 7 guides a combustion gas fed from the combustor 3 to the turbine 3 while swirling the combustion gas about a rotation axis C.

The compressor 1 and the turbine 5 are accommodated in a housing 9 of the gas turbine engine GT, and the combustor 3 is mounted to an upper portion of the turbine 5 so as to protrude relative to the housing 9. The combustor 3, which is of a single-can type as described above, is disposed on the upper portion of the turbine 5 at a position eccentric from the rotation axis C of the gas turbine engine GT, and extends substantially in the vertical direction. A radially outward portion and a rearward portion (on the turbine 5 side in direction of the rotation axis C) of the scroll 7 are covered with a scroll housing 13 forming a part of the housing 9. The compressor 1 is of a two-stage centrifugal type, and first and second diffusers 14 and 15 are provided downstream of first and second impellers 11 and 12, respectively.

Compressed air discharged from the compressor 1 flows into the scroll housing 13, and cools an outer peripheral surface of the scroll 7. Then, the compressed air is sent to the combustor 3 to be mixed with a fuel and combusted in the combustor 3 to generate a combustion gas G. The combustion gas G generated in the combustor 3 is guided into the turbine 5 through the scroll 7 to cause the turbine 5 to rotate, thereby driving the compressor 1 coupled to the turbine 5 via a rotary shaft 10, and the power generator which is a rotating load.

The scroll 7 includes an outer peripheral wall 7a having an outer peripheral surface connected by means of welding to one end portions, in the axial direction, of a plurality of outer periphery support members 21 formed of plate members. Each of the other end portions in the axial direction of the outer periphery support members 21 is axially slidably mounted by means of connecting bolts B1 to the second diffuser 15. Further, the scroll includes an inner peripheral wall 7b which is axially slidably connected by means of an inner periphery support member 25 to an outer peripheral portion of a first-stage turbine nozzle 27 of the turbine 5.

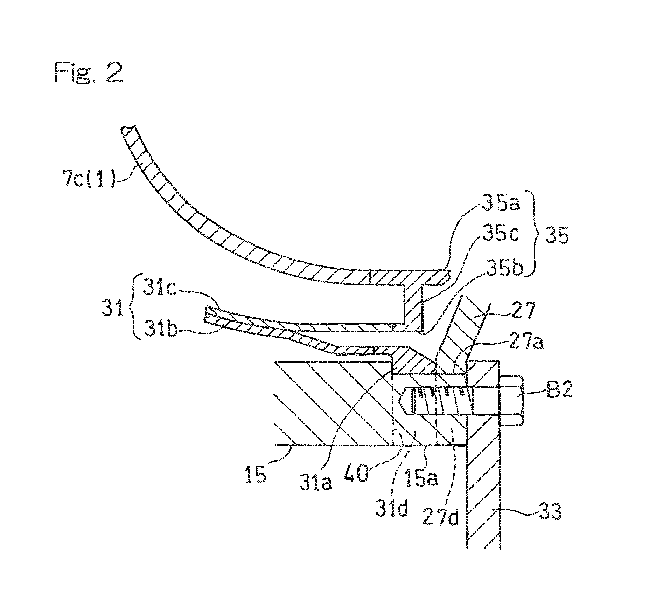

As shown on an enlarged scale in Fig. 2, a seal plate 33 that seals a gap between the compressor 1 and the turbine 5 is connected by means of a fixing bolt B2 to an inner diameter side rear end portion (an end portion on the turbine 5 side) 15a of the second diffuser 15. On an outer peripheral surface of the inner peripheral side rear end portion 15a of the second diffuser 15, an inner mount portion 31 a of a flange member 31 of an annular shape and an inner mount portion 27a of the first-stage turbine nozzle 27 are fitted. The flange member 31 includes a tubular inner peripheral portion 31b and a tubular outer peripheral portion 31c. The inner peripheral portion 31b has one end in the axial direction which is connected to one end in the axial direction of the outer peripheral portion 31 c by means of seam welding. The inner mount portion 31 a is formed integrally with an inner end portion of the inner peripheral portion 31b. In this way, the flange member 31 is formed as a radially elastic member and therefore thermal expansion of the scroll 7 in the radial direction is absorbed by the flange member 31 so that the scroll 7 is stably supported by the flange member 31.

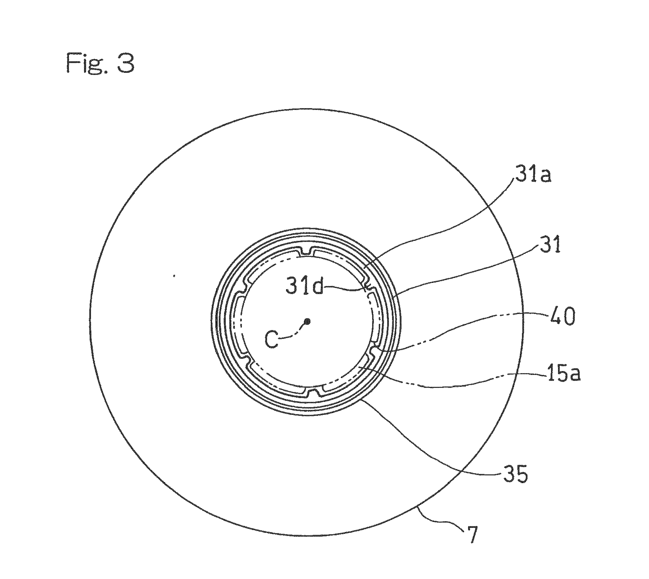

The inner mount portion 31a of the flange member 31 is, as shown in Fig. 3, provided with a plurality of projecting pieces 31d, projecting radially inwardly, and arranged at equal intervals in the circumferential direction. Similar projecting pieces 27d (Fig. 2) are also provided on the inner mount portion 27a of the first-stage turbine nozzle 27. On the other hand, the inner peripheral side rear end portion 15a of the second diffuser 15 is formed with recesses 40 corresponding respectively to the projecting pieces 27d and 31d. As shown in Fig. 2, one projecting piece 27d and one projecting piece 31d are inserted in each recess 40 such that those pieces 27d and 31d overlap with each other. In this way, circumferential positions of the first turbine nozzle 27 and the flange member 31 are restricted. The projecting pieces 27d and 31d as well as the corresponding inner mount portions 27a and 31a are held between the inner peripheral side rear end portion 15a of the second diffuser 15 and the seal plate 33 by the fastening force of the fixing bolt B2.

A front wall 7c of the scroll 7 and the outer peripheral portion 31c of the flange member 31 are coupled with each other via a coupling member 35 of an annular shape. Specifically, the coupling member 35 includes: a coupling member outer peripheral annular portion 35a forming an outer peripheral surface thereof; a coupling member inner peripheral annular portion 35b forming an inner peripheral surface thereof; and an intermediate annular portion 35c that intervenes between the annular portions 35a and 35b and extends substantially in the radial direction of the scroll 7.

The rear end of the scroll 7 is connected to the front end of the coupling member outer peripheral annular portion 35a, and the rear end of the outer peripheral portion 31 c of the flange member 31 is connected to the front end of the coupling member inner peripheral annular portion 35b. In this way, the scroll 7 and the flange member 31 are coupled to each other via the coupling member 35. The scroll 7 is connected to the coupling member 35 and the flange member 31 is connected to the coupling member 35 by means of butt welding, for example.

In the present embodiment, the scroll 7 and the coupling member 31 may be made of the same metal material having excellent heat resistance and oxidation resistance, such as cobalt-based alloy. The outer peripheral portion 31 c of the flange member 31 may be made of nickel-based alloy having excellent heat resistance and oxidation resistance. The inner peripheral portion 31b may be made of stainless steel.

As described above, in the scroll structure of the gas turbine engine GT according to the present embodiment, the scroll 7 and the flange member 31 are joined not directly but through the intervening coupling member 35. Therefore, occurrence of thermal stress due to a difference in temperature between the high-temperature scroll 7 and the flange member 31 is suppressed, thereby effectively preventing cracks from being formed in these members. In particular, the coupling member 35 has the intermediate annular portion 35c that extends in the radial direction, and therefore, it is possible to easily prevent cracks from being formed in the scroll 7 by appropriately selecting the radial dimension and the axial dimension of the intermediate annular portion 35c.

Although the present invention has been described above in connection with the embodiments thereof with reference to the accompanying drawings, numerous additions, changes, or deletions can be devised unless they depart from the gist of the present invention. Accordingly, such additions, changes, or deletions are to be construed as included in the scope of the present invention.

### [Reference Numerals]

- 1: Compressor
- 3: Combustor
- 5: Turbine
- 7: Scroll
- 31: Flange member
- 35: Coupling member
- 35a: Outer peripheral annular portion of coupling member
- 35b: Inner peripheral annular portion of coupling member
- 35c: Intermediate annular portion of coupling member
- GT: Gas turbine engine

## Claims

1. A gas turbine engine equipped with a combustor of a single-can type, comprising:
a scroll to guide a combustion gas fed from a combustor to a turbine while swirling the combustion gas about a rotation axis;
a flange member to support the scroll with respect to the gas turbine engine from an inner peripheral side of the scroll; and
a coupling member of an annular shape to couple the scroll and the flange member with each other,
wherein the scroll and the flange member are connected to the coupling member such that the scroll and the flange member are not in direct contact with each other.

2. The gas turbine engine as claimed in claim 1, wherein the coupling member comprises an outer peripheral annular portion forming an outer peripheral surface of the coupling member, and configured to be connected to the scroll, an inner peripheral annular portion forming an inner peripheral surface of the coupling member, and configured to be connected to the flange member, and an intermediate annular portion that intervenes between the outer peripheral portion and the inner peripheral portion, and extends in a radial direction.

3. The gas turbine engine as claimed in claim 1 or 2, wherein the coupling member is made of the same material as a material forming the scroll.

4. The gas turbine engine as claimed in any of claims 1 to 3, wherein the flange member includes a tubular inner peripheral portion and a tubular outer peripheral portion, the inner peripheral portion having one end in an axial direction connected to one end in an axial direction of the outer peripheral portion, and wherein the coupling member is connected to the outer peripheral portion of the flange member and to the scroll.
